# EUROPÄISCHE PATENTSCHRIFT

(11) **EP 1 591 708 B1**
(45) Veröffentlichungstag und Bekanntmachung des Hinweises auf die Patenterteilung: **03.06.2009**
(21) Anmeldenummer: 05008097.7
(22) Anmeldetag: 13.04.2005
(51) Int. Cl.: F16L 25/06, F16L 41/08, F16L 55/46

(54) **Verbindungselement zum Anschluss eines Schlauchs an eine Molchstation**
Connection element for connecting a hose to a mole station
Elément de connexion pour la connexion d'un tuyau souple à une gare de racleur

(30) Priorität: 28.04.2004 DE 102004020819
(43) Veröffentlichungstag der Anmeldung: 02.11.2005
(73) Patentinhaber: Dürr Systems GmbH, 70435 Stuttgart (DE)
(72) Erfinder: Martin, Herbert, 71384 Weinstadt (DE); Collmer, Andreas, 71665 Vaihingen/Enz (DE); Schwager, Werner, 71642 Ludwigsburg (DE); Stiegler, Martin, 71711 Steinheim (DE); Michelfelder, Manfred, 71711 Steinheim (DE)
(74) Vertreter: Beier, Ralph

(56) Entgegenhaltungen:
- DE-B3- 10 241 921
- US-A- 5 829 794

## Beschreibung

Die Erfindung betrifft ein Verbindungselement, insbesondere zur Verbindung eines Schlauchs mit einer Molchstation in einer Beschichtungsanlage, gemäß dem Oberbegriff des Anspruchs 1 sowie ein Rohrnetzbauteil, insbesondere eine Molchstation einer Beschichtungsanlage, gemäß dem Oberbegriff des Anspruchs 12.

Aus DE 102 33 862 A1 ist ein Verbindungselement bekannt, mit dem eine schlauch- oder rohrförmige Leitung an ein Rohrnetzbauteil angeschlossen werden kann. Hierzu weist das bekannte Verbindungselement auf der der Leitung zugewandten Seite ein Anschlussstück auf, an dem die schlauch- oder rohrförmige Leitung festgeklemmt werden kann. Auf der gegenüberliegenden Seite weist das bekannte Verbindungselement ein weiteres Anschlussstück mit einem Außengewinde auf, so dass das Verbindungselement mit dem Rohrnetzbauteil verschraubt werden kann. Durch das bekannte Verbindungselement verläuft hierbei eine Durchgangsbohrung, wobei die Durchgangsbohrung molchbar ist und deshalb an den beiden Übergängen zu der schlauch- oder rohrförmigen Leitung einerseits und zu dem Rohrnetzbauteil andererseits keine Querschnittssprünge aufweist.

Nachteilig an dem vorstehend beschriebenen bekannten Verbindungselement ist die Tatsache, dass die Verschraubung des Verbindungselements mit dem Rohrnetzbauteil zeitaufwendig ist. Bei einem Einsatz dieses Verbindungselements in einer molchbaren Beschichtungsanlage verhindert dies einen schnellen Molchwechsel an den Quellstationen.

Aus US 5 829 794 und DE 102 41 921 B3 sind Verbindungen zwischen einem Verbindungselement und einem Rohrnetzbauteil bekannt, die durch Hebelkonstruktionen axial verspannt werden, was jedoch relativ aufwendig ist.

Ferner ist aus EP 1 099 896 A2 eine Verbindung zwischen einem Verbindungselement und einem Rohrnetzbauteil bekannt, bei der eine Arretierung durch einen Sicherungsring erfolgt. Der Sicherungsring ermöglicht hierbei jedoch keine axiale Verspannung der Verbindung und die Verbindung selbst ist nicht molchbar.

Aus DE 102 14 759 A1 und DE 100 63 234 C1 sind Verbindungen bekannt, die jeweils Spannschrauben aufweisen.

Schließlich ist zum Stand der Technik noch auf DE 101 15 471 A1 hinzuweisen.

Der Erfindung liegt deshalb die Aufgabe zugrunde, das vorstehend beschriebene bekannte Verbindungselement dahingehend zu verbessern, dass die Verbindung mit dem Rohrnetzbauteil möglichst schnell hergestellt und wieder gelöst werden kann.

Diese Aufgabe wird, ausgehend von dem vorstehend beschriebenen bekannten Verbindungselement gemäß dem Oberbegriff des Anspruchs 1 durch die kennzeichnenden Merkmale des Anspruchs 1 gelöst. Darüber hinaus wird die Aufgabe durch ein entsprechend angepasstes Rohrnetzbauteil gemäß Anspruch 10 gelöst.

Die Erfindung umfasst die allgemeine technische Lehre, zur Befestigung des Verbindungselements an dem Rohrnetzbauteil eine Verschraubung, sondern eine Schnellkupplung vorzusehen, die eine schnelle Verbindung bzw. Trennung ermöglicht.

Das erfindungsgemäße Verbindungselement weist deshalb vorzugsweise eine Steckverbindung zu dem Rohrnetzbauteil auf, wobei die Steckverbindung vorzugsweise durch ein Verriegelungselement formschlüssig arretierbar ist. Zur Herstellung der Verbindung zu dem Rohrnetzbauteil wird das erfindungsgemäße Verbindungselement also vorzugsweise in eine entsprechende Aufnahme in dem Rohrnetzbauteil hineingesteckt und anschließend mit dem Verriegelungselement arretiert.

Auf diese Weise ist vorzugsweise eine beschädigungsfreie Lösung der Steckverbindung zwischen dem Verbindungselement und dem Rohrnetzbauteil möglich, so dass auch bei einem häufigen Molchwechsel in einer Beschichtungsanlage keine Schäden auftreten.

Vorzugsweise dient das Verriegelungselement nicht nur zur Arretierung der Steckverbindung zwischen dem erfindungsgemäßen Verbindungselement und dem Rohrnetzbauteil, sondern auch zur axialen Verspannung der Steckverbindung. Im montierten Zustand erzeugt das Verriegelungselement also vorzugsweise eine axial gerichtete Anpresskraft, mit der das Verbindungselement axial gegen das Rohrnetzbauteil gedrückt wird. Diese axial gerichtete Anpresskraft ermöglicht vorteilhaft eine gute Dichtwirkung zwischen dem erfindungsgemäßen Verbindungselement und dem Rohrnetzbauteil.

In einem bevorzugten Ausführungsbeispiel der Erfindung ist das Verriegelungselement ein Schieber, der vorzugsweise in Querrichtung zu dem Verbindungselement verschiebbar und in Axialrichtung fixiert ist. Der Schieber kann hierbei zwischen einer Arretierungsstellung und einer Freigabestellung verschoben werden, wobei die Verschiebung aus der Freigabestellung in die Arretierungsstellung vorzugsweise durch eine Spannschraube erfolgt, wobei die Spannschraube vorzugsweise in das entsprechend angepasste Rohrnetzbauteil integriert ist.

Erfindungsgemäß weist der Schieber an einem Ende eine gegenüber seiner Verschiebungsrichtung geneigte Klemmfläche und an dem gegenüberliegenden Ende einen Eingriff für die Spannschraube auf. Die geneigte Klemmfläche bewirkt bei einer Verschiebung des Schiebers aus der Freigabestellung in die Arretierungsstellung eine axiale Verspannung der Steckverbindung zwischen dem Verbindungselement und dem Rohrnetzbauteil, um die bereits vorstehend erwähnte axial gerichtete Anpresskraft zu erzeugen und dadurch die Dichtwirkung zu verbessern.

Zum Einsatz des erfindungsgemäßen Verbindungselements in einer Beschichtungsanlage sind die Übergänge zu dem Rohrnetzbauteil einerseits und zu der rohr- oder schlauchförmigen Leitung andererseits vorzugsweise molchbar. An den Übergängen treten deshalb vorzugsweise keine Querschnittssprünge der Durchgangsbohrung auf und die Übergänge sind vorzugsweise im Wesentlichen totraumfrei.

Zur Verbesserung der Molchbarkeit kann sich der Innenquerschnitt der Durchgangsbohrung jedoch im Bereich der Übergänge in Richtung der Übergänge geringfügig erweitern, um ein Anstoßen eines Molchs beim Durchtritt zu vermeiden. Die Durchgangsbohrung in dem erfindungsgemäßen Verbindungselement weist also vorzugsweise an den Übergängen zu den angrenzenden Anschlussstücken eine Fase auf, damit der Molch an dem Übergang nicht anstößt.

Die Verbindung zu der schlauch- oder rohrförmigen Leitung kann bei dem erfindungsgemäßen Verbindungselement dagegen in herkömmlicher Weise erfolgen, wie in der bereits eingangs zitierten Patentanmeldung DE 102 33 862 A1 beschrieben wird, so dass der Inhalt dieser Patentanmeldung der vorliegenden Beschreibung hinsichtlich der Verbindung zwischen dem Verbindungselement und der schlauch- oder rohrförmigen Leitung in vollem Umfang zuzurechnen ist.

Vorzugsweise liegt die schlauch- oder rohrförmige Leitung also im montierten Zustand mit einer axialen Überlappung an einer inneren oder äußeren Mantelfläche des ersten Anschlussstück an, damit dieses eine radial ausgerichtete Dichtkraft aufnehmen kann.

Weiterhin weist das erste Anschlussstück im Bereich der axialen Überlappung mit der schlauchförmigen Leitung vorzugsweise eine profilierte Oberfläche auf, um eine formschlüssige Verbindung mit der schlauchförmigen Leitung zu bilden.

Ferner weist das erste Anschlussstück an seiner Außenseite vorzugsweise einen bezüglich seiner Längsachse umlaufenden Anschlag für die Stirnfläche der auf das erste Anschlussstück aufgesteckten Leitung auf, um eine umlaufende Dichtfläche zu bilden und eine axial ausgerichtete Dichtkraft aufzunehmen.

Darüber hinaus ist zum Festklemmen der Leitung auf dem ersten Anschlussstück vorzugsweise eine Spannhülse vorgesehen, die im montierten Zustand außen auf der Mantelfläche der auf das erste Anschlussstück aufgesteckten Leitung aufliegt.

Ferner ist an der Innenseite der Spannhülse vorzugsweise ein Mitnahmedorn angebracht, der im montierten Zustand in die äußere Mantelfläche der Leitung eingreift, um die Leitung bei einer Axialverschiebung der Spannhülse mitzunehmen.

Weiterhin kann zur Axialverschiebung der Spannhülse eine Überwurfmutter vorgesehen sein, wobei die Überwurfmutter ein Innengewinde aufweist, das in ein entsprechend angepasstes Außengewinde an dem ersten Anschlussstück eingreift.

Die Überwurfmutter kann hierbei über einen Mitnehmer axial mit der Spannhülse gekoppelt sein, wobei der Mitnehmer die Spannhülse beim Aufschrauben und/oder beim Abschrauben der Überwurfmutter axial mitnimmt.

Ferner ist es vorteilhaft, wenn die Überwurfmutter unverlierbar an dem ersten Anschlussstück angebracht ist.

In einem vorteilhaften Ausführungsbeispiel weist die Überwurfmutter an ihrer der Leitung zugewandten Seite eine Mündungsöffnung auf, die sich trompetenförmig erweitert.

Darüber hinaus kann auf dem ersten Anschlussstück eine Klemmhülse angeordnet sein, wobei die Klemmhülse an ihrer Innenseite eine Auflaufschräge für die Spannhülse aufweist, welche die Spannhülse bei einer Axialbewegung in Richtung des ersten Anschlussstücks radial auf die Leitung drückt.

Die Erfindung ist jedoch nicht auf das vorstehend beschriebene erfindungsgemäße Verbindungselement beschränkt, sondern umfasst auch ein entsprechend angepasstes Rohrnetzbauteil, wie beispielsweise eine Molchstation oder ein Ventilblock einer Beschichtungsanlage.

Hierzu weist das erfindungsgemäße Rohrnetzbauteil eine Steckverbindung zu dem erfindungsgemäßen Verbindungselement und ein Verriegelungselement zur formschlüssigen Verriegelung der Steckverbindung auf.

Das Verriegelungselement ist hierbei eine in dem Rohrnetzbauteil geführte Spannschraube, die zwischen einer Arretierungsstellung und einer Freigabestellung beweglich ist, wobei die Spannschraube im montierten Zustand in den zuvor beschriebenen Schieber des erfindungsgemäßen Verbindungselements eingreifen kann. Bei der Montage wird das erfindungsgemäße Verbindungselement also in das Rohrnetzbauteil eingesteckt, woraufhin die Spannschraube in dem Rohrnetzbauteil aus der Freigabestellung in die Arretierungsstellung gedreht wird. Bei dieser Bewegung greift die Spannschraube in den Schieber ein und verschiebt diesen aus der Freigabestellung in die Arretierungsstellung, bis der Schieber schließlich axial fixiert ist.

Die axiale Fixierung des Schiebers in dem Rohrnetzbauteil kann beispielsweise durch einen Zylinderstift erfolgen, der quer zur Verschiebungsrichtung des Schiebers verläuft und in der Arretierungsstellung des Schiebers in eine an der Unterseite des Schiebers angeordnete Nut eingreift.

Die Steckverbindung in dem erfindungsgemäßen Rohrnetzbauteil weist vorzugsweise eine Sackbohrung auf, in die das erfindungsgemäße Verbindungselement hineingesteckt werden kann, wobei die Sackbohrung an ihrem Boden vorzugsweise eine Dichtfläche bildet und in die Durchgangsbohrung innerhalb des Rohrnetzbauteils übergeht.

Bei dem erfindungsgemäßen Rohrnetzbauteil ist die Durchgangsbohrung vorzugsweise molchbar, wobei das Merkmal der Molchbarkeit bereits vorstehend unter Bezugnahme auf das erfindungsgemäße Verbindungselement erläutert wurde, so dass auf eine nochmalige Beschreibung der Molchbarkeit in Bezug auf das erfindungsgemäße Rohrnetzbauteil verzichtet werden kann. Die vorstehend erwähnten Merkmale zur Molchbarkeit sind deshalb vorzugsweise auch bei dem erfindungsgemäßen Rohrnetzbauteil realisiert.

Ferner ist zu erwähnen, dass die Erfindung nicht auf das eingangs erwähnte erfindungsgemäße Verbindungselement und das vorstehend beschriebene erfindungsgemäße Rohrnetzbauteil als Einzelteil beschränkt ist, sondern auch ein Rohrnetz mit einem erfindungsgemäßen Rohrnetzbauteil und einem erfindungsgemäßen Verbindungselement umfasst.

Darüber hinaus umfasst die Erfindung auch die Verwendung des erfindungsgemäßen Verbindungselements zur Verbindung einer Molchstation mit einer schlauch- oder rohrförmigen Leitung einer Beschichtungsanlage.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:
- Figur 1: eine Längsschnittansicht eines erfindungsgemäßen Verbindungselements,

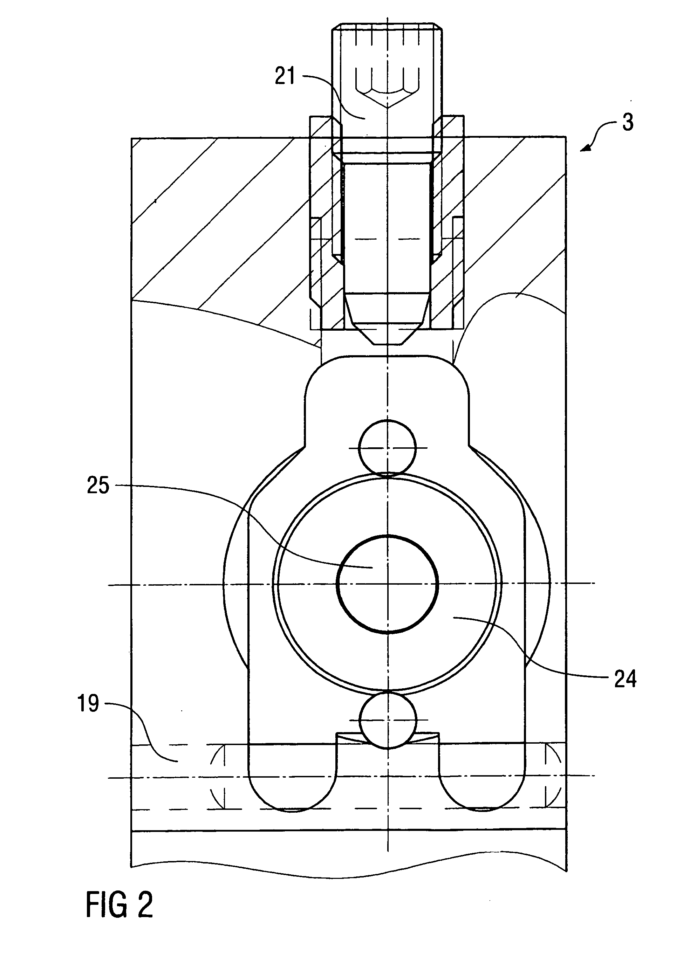

- Figur 2: eine axiale Ansicht eines erfindungsgemäßen Rohrnetzbauteils, das an das Verbindungselement gemäß Figur 1 angepasst ist,
- Figur 3: eine Querschnittsansicht durch das Verbindungselement gemäß Figur 1,
- Figur 4: eine Längsschnittansicht durch das Verbindungselement gemäß Figur 1 und das Rohrnetzbauteil gemäß Figur 2 im montierten Zustand,

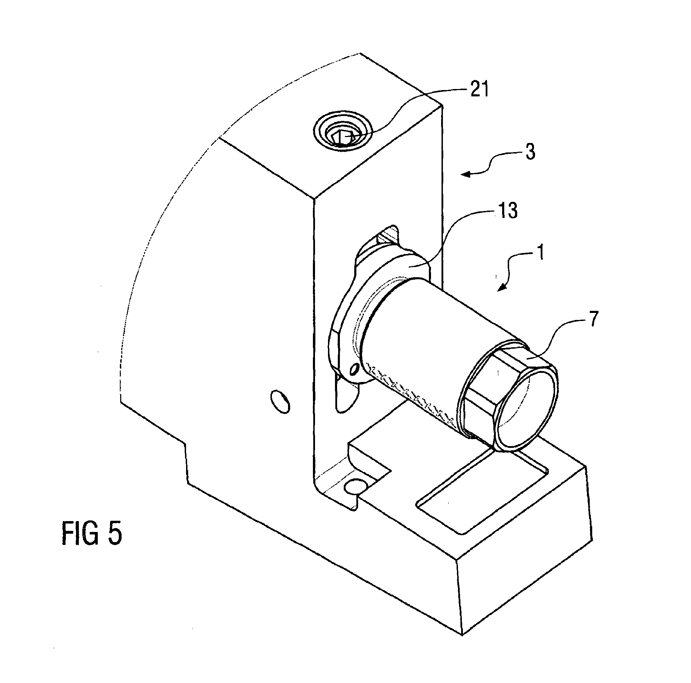

- Figur 5: eine perspektivische Darstellung des Rohrnetzbauteils gemäß Figur 2 mit dem montierten Verbindungselement gemäß Figur 1 sowie
- Figur 6: eine perspektivische Darstellung des Verbindungselements aus Figur 1 mit einem Schieber zur Arretierung des Verbindungselements in dem Rohrnetzbauteil gemäß Figur 5.

Die Zeichnungen zeigen ein erfindungsgemäßes Verbindungselement 1 zur Verbindung eines Schlauchs 2 mit einem Ventilblock 3 einer molchbaren Beschichtungsanlage.

Die Verbindung des Schlauchs 2 mit dem Verbindungselement 1 erfolgt hierbei in herkömmlicher Weise wie in der Patentanmeldung DE 102 33 862 A1 beschrieben ist, so dass die Verbindung zwischen dem Schlauch 2 und dem Verbindungselement 1 im Folgenden nur kurz beschrieben wird.

Hierzu weist das Verbindungselement 1 auf der dem Schlauch 2 zugewandten Seite ein Anschlussstück 4 mit einer axial durchgehenden Durchgangsbohrung 5 auf, wobei der Schlauch 2 auf das Anschlussstück 4 aufgesteckt werden kann. Der Schlauch 2 weist hierbei an seinem stirnseitigen Ende innen eine absatzartige Querschnittserweiterung auf, so dass die Innenwand des Schlauchs 2 im aufgesteckten Zustand absatzlos, totraumfrei und damit molchbar in die Innenwand der Durchgangsbohrung 5 übergeht.

An seinem stirnseitigen Ende weist das Anschlussstück 4 an seiner außenliegenden Mantelfläche eine Profilierung 6 auf, die im aufgesteckten Zustand in die Innenwand des Schlauchs 2 eingreift und dadurch dessen Ablösung in axialer Richtung erschwert.

Zur weiteren Fixierung des Schlauchs 2 auf dem Anschlussstück 4 ist eine Spannhülse 7 vorgesehen, die von einer auf das Anschlussstück 4 aufgeschraubten unverlierbaren Überwurfmutter 8 axial verschiebbar ist. Die Spannhülse 7 weist an ihrer dem Anschlussstück 4 zugewandten Seite axial verlaufende Schlitze 9 auf, die ein Zusammendrücken der Spannhülse 4 erlauben.

In das Anschlussstück 4 ist weiterhin eine Klemmhülse 10 eingesetzt, die eine Auflaufschräge für die Spannhülse 7 aufweist. Beim axialen Festschrauben der Überwurfmutter 8 wird die Spannhülse 7 in Richtung der Klemmhülse 10 gedrückt, bis die Auflaufschräge der Klemmhülse 10 schließlich die Spannhülse 7 radial nach innen gegen die Außenwand des Schlauchs 2 drückt, wodurch der Schlauch 2 auf dem Anschlussstück 4 axial fixiert wird.

Zur Trennung der Verbindung zwischen dem Schlauch 2 und dem erfindungsgemäßen Verbindungselement 1 wird die Überwurfmutter 8 dann wieder abgeschraubt, bis die Spannhülse 7 sich wieder nach außen ausdehnen kann, woraufhin der Schlauch 2 axial abgezogen werden kann.

Auf der dem Schlauch 2 gegenüberliegenden Seite des Verbindungselements 1 ist ein weiteres Anschlussstück 11 vorgesehen, das eine Befestigung des Verbindungselements 1 an dem Ventilblock 3 ermöglicht. Hierzu weist das Anschlussstück 11 einen Schieber 12 auf, der zwischen zwei umlaufenden Flanschen 13, 14 axial fixiert ist, wobei der Schieber 12 zwischen den beiden Flanschen 13, 14 in Querrichtung verschiebbar ist.

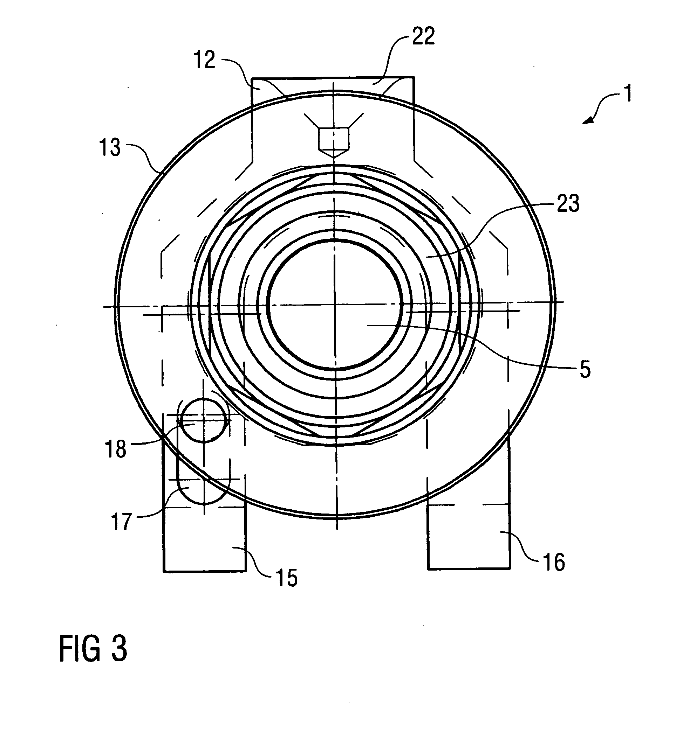

In dem in Figur 3 unten liegenden Bereich verzweigt der Schieber 12 in zwei parallele Schenkel 15, 16, die das Anschlussstück 11 umgreifen und den Schieber 12 gegen eine Verdrehung sichern.

In dem Schenkel 15 des Schiebers 12 befindet sich eine Nut 17, in der ein Zylinderstift 18 geführt wird, wobei der Zylinderstift 18 in dem Flansch 13 fixiert ist. Die Nut-Federkombination der Nut 17 mit dem Zylinderstift 18 begrenzt also den Bewegungsspielraum des Schiebers 12 zwischen einer Freigabestellung und einer Arretierungsstellung, wobei der Schieber 12 das Verbindungselement 1 in der Arretierungsstellung des Schiebers 12 in dem Ventilblock 3 arretiert, wohingegen das Verbindungselement 1 von dem Ventilblock 3 getrennt werden kann, wenn sich der Schieber 12 in seiner Freigabestellung befindet.

In dem Ventilblock 3 befindet sich zur Arretierung des Verbindungselements 1 ein Zylinderstift 19, der rechtwinklig zur Längsachse des Verbindungselements 1 verläuft und sich im montierten Zustand unterhalb des Schiebers 12 befindet. Der Zylinderstift 19 greift in der Arretierungsstellung des Schiebers 12 in eine V-förmige Nut 20 an der Unterseite der beiden Schenkel 15, 16 des Schiebers 12 ein, wodurch das Verbindungselement 1 in dem Ventilblock 3 arretiert wird.

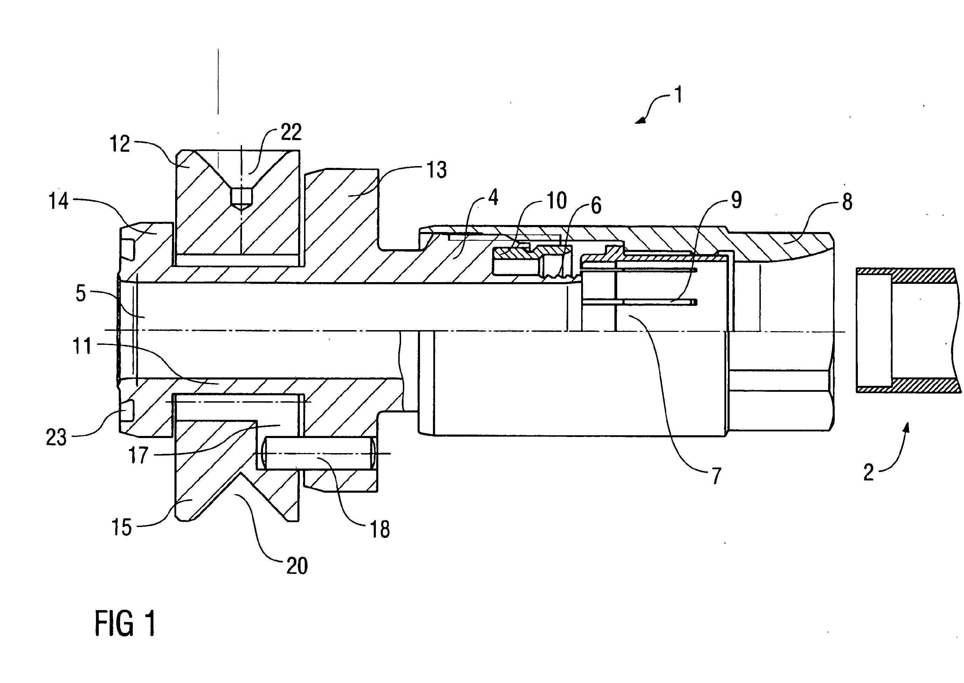

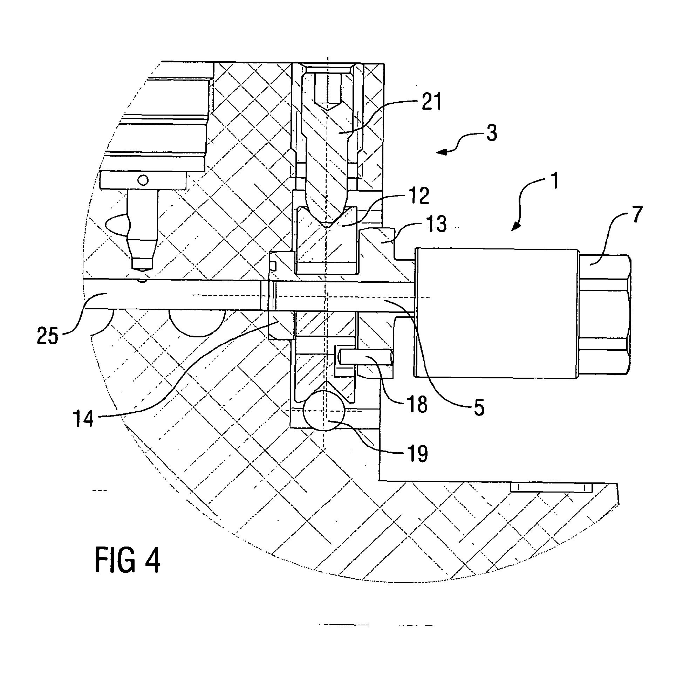

Die Verschiebung des Schiebers 12 aus der in Figur 1 gezeigten Freigabestellung in die in Figur 4 gezeigte Arretierungsstellung erfolgt durch eine Spannschraube 21, die in dem Ventilblock 3 oberhalb des Schiebers 12 angeordnet ist und in eine Aufnahme 22 an der Oberseite des Schiebers 12 eingreift. Beim Hineinschrauben der Spannschraube 21 greift die Spannschraube 21 in die Aufnahme 22 des Schiebers 12 ein und drückt den Schieber 12 dadurch aus der Freigabestellung nach unten in die Arretierungsstellung, bis die Flanken der Nut 20 an der Unterseite des Schiebers 12 gegen den Zylinderstift 19 stoßen. Bei einem weiteren Anziehen der Spannschraube 21 wirkt die ventilblockseitige Nutflanke der Nut 20 als Klemmfläche und gleitet an der Mantelfläche des ortsfesten Zylinderstifts 19, wodurch das Verbindungselement 1 in Richtung des Ventilblocks 3 vorgespannt wird.

In der Stirnfläche des Flanschs 14 befindet sich eine umlaufende Nut 23, in der ein Dichtring angeordnet ist, wobei der Dichtring zur Vereinfachung nicht dargestellt ist. Beim Anziehen der Spannschraube 21 wird der in der Nut 23 befindliche Dichtring gegen die Bodenfläche einer in dem Ventilblock 3 befindlichen Sackbohrung 24 gepresst, wodurch eine gute Dichtwirkung erreicht wird.

Zur Lösung der Steckverbindung zwischen dem Verbindungselement 1 und dem Ventilblock 3 muss die Spannschraube 21 lediglich gelöst werden, bis der Schieber 12 an seiner Unterseite den Zylinderstift 19 freigibt, so dass das Verbindungselement 1 axial abgezogen werden kann.

In dem Ventilblock 3 ist weiterhin eine Durchgangsbohrung 25 angeordnet, die im montierten Zustand mit der Durchgangsbohrung 5 in dem Verbindungselement 1 fluchtet, wobei der Übergang von der Durchgangsbohrung 5 zu der Durchgangsbohrung 25 totraumfrei ist und keine Querschnittssprünge aufweist, so dass der Übergang molchbar ist.

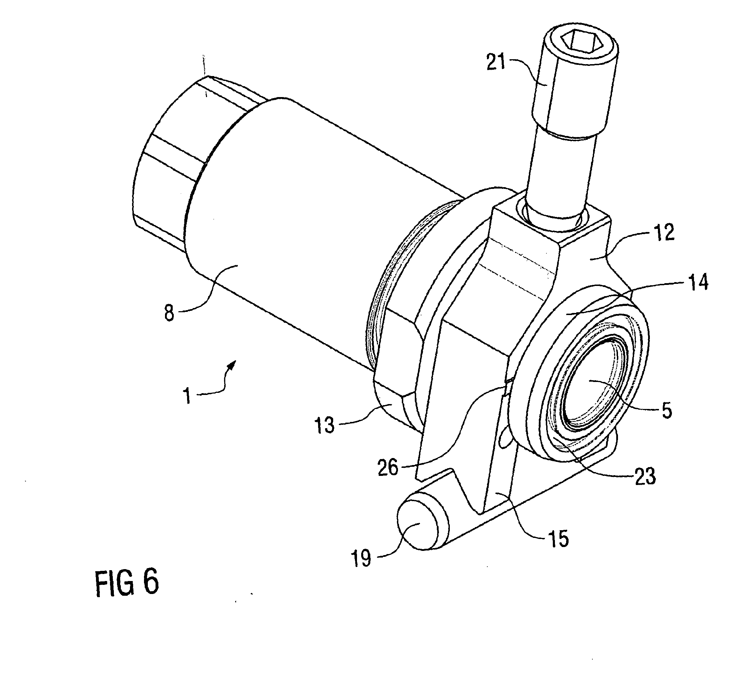

Aus der perspektivischen Darstellung in Figur 6 ist ferner ersichtlich, dass an den beiden Schenkeln 15, 16 des Schiebers 12 auf der dem Flansch 14 zugewandten Stirnfläche jeweils ein Vorsprung 26 angeformt ist. In der Arretierungsstellung des Schiebers 12 liegen die beiden Vorsprünge 26 nebeneinander in einer Linie mit der Achse der Durchgangsbohrung 5. Die beiden Vorsprünge 26 dienen zum Ausgleich von Winkelstellungsfehlern zwischen dem Schieber 12 und dem Flansch 14 und bewirken, dass der Schieber 12 kein Kippmoment auf den Flansch 14 und damit auf das gesamte Verbindungselement 1 ausübt. Stattdessen übt der Schieber 12 in seiner Arretierungsstellung über die beiden Vorsprünge 26 nur eine axiale Anpresskraft auf den Flansch 14 und damit auf das gesamte Verbindungselement 1 aus.

Die Erfindung ist nicht auf das vorstehend beschriebene bevorzugte Ausführungsbeispiel beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste:

- 1: Verbindungselement
- 2: Schlauch
- 3: Ventilblock
- 4: Anschlussstück
- 5: Durchgangsbohrung
- 6: Profilierung
- 7: Spannhülse
- 8: Überwurfmutter
- 9: Schlitze
- 10: Klemmhülse
- 11: Anschlussstück
- 12: Schieber
- 13: Flansch
- 14: Flansch
- 15: Schenkel
- 16: Schenkel
- 17: Nut
- 18: Zylinderstift
- 19: Zylinderstift
- 20: Nut
- 21: Spannschraube
- 22: Aufnahme
- 23: Nut
- 24: Sackbohrung
- 25: Durchgangsbohrung
- 26: Nase

## Patentansprüche

1. Verbindungselement (1), insbesondere zur Verbindung eines Schlauchs mit einer Molchstation in einer Beschichtungsanlage, mit
- einem ersten Anschlussstück (4) zum Anschluss einer schlauch- oder rohrförmigen Leitung (2),
- einem dem ersten Anschlussstück (4) axial gegenüber liegenden zweiten Anschlussstück (11) zum Anschluss an ein Rohrnetzbauteil (3), insbesondere an eine Molchstation,
- einer durch das erste Anschlussstück (4) und durch das zweite Anschlussstück (11) axial durchgehenden Durchgangsbohrung (5) zur Aufnahme eines Fluids und/oder eines Molchs,
- wobei das zweite Anschlussstück (11) zum Anschluss an das Rohrnetzbauteil (3) eine Steckverbindung (12-22) mit einem Verriegelungselement (12, 19) zur formschlüssigen Arretierung der Steckverbindung (12-22) aufweist,
- wobei das Verriegelungselement ein Schieber (12) ist, der zwischen einer Arretierungsstellung und einer Freigabestellung verschiebbar ist,
**dadurch gekennzeichnet,**
- **dass** der Schieber (12) an einem Ende eine gegenüber seiner Verschiebungsrichtung geneigte Klemmfläche (20) und an dem gegenüberliegenden Ende einen Eingriff (22) für eine Spannschraube (21) aufweist, und
- **dass** die geneigte Klemmfläche (20) bei einer Verschiebung des Schiebers (12) aus der Freigabestellung in die Arretierungsstellung eine axiale Verspannung der Steckverbindung (12-22) zwischen dem Verbindungselement (1) und dem Rohrnetzbauteil (3) bewirkt.

2. Verbindungselement (1) nach Annspruch 1, **dadurch gekennzeichnet, dass** die Steckverbindung (12-22) beschädigungsfrei lösbar ist.

3. Verbindungselement (1) nach einem der vorhergehenden Ansprüche, **dadurch gekennzeichnet, dass** die Steckverbindung (12-22) durch das Verriegelungselement axial verspannbar ist und im montierten Zustand eine axial gerichtete Anpresskraft erzeugt, mit der das Verbindungselement (1) axial gegen das Rohrnetzbauteil (3) gedrückt wird.

4. Verbindungselement (1) nach Anspruch 4, **dadurch gekennzeichnet, dass** der Schieber (12) in Querrichtung verschiebbar und in Axialrichtung fixiert ist.

5. Verbindungselement (1) nach einem der vorhergehenden Ansprüche, **gekennzeichnet durch** einen molchbaren Übergang von dem ersten Anschlussstück (4) zu der rohr- oder schlauchförmigen Leitung (2) und von dem zweiten Anschlussstück (11) zu dem Rohrnetzbauteil (3).

6. Verbindungselement (1) nach einem der vorhergehenden Ansprüche, **dadurch gekennzeichnet, dass** der Übergang von dem ersten Anschlussstück (4) zu der schlauch- oder rohrförmigen Leitung (2) und der Übergang von dem zweiten Anschlussstück (11) zu dem Rohrnetzbauteil (3) im Wesentlichen totraumfrei ist.

7. Verbindungselement (1) nach einem der vorhergehenden Ansprüche, **dadurch gekennzeichnet,**
**dass** sich die Durchgangsbohrung (5) am Übergang zu dem Rohrnetzbauteil (3) in Richtung des Rohrnetzbauteils (3) erweitert und/oder
**dass** sich die Durchgangsbohrung (5) am Übergang zu der Leitung (2) in Richtung der Leitung (2) erweitert.

8. Verbindungselement (1) nach einem der vorhergehenden Ansprüche, **dadurch gekennzeichnet, dass** das zweite Anschlussstück (11) stirnseitig eine Dichtung aufweist.

9. Verbindungselement nach einem der vorhergehenden Ansprüche, **dadurch gekennzeichnet, dass** an dem Schieber (12) auf der dem Rohrnetzbauteil (3) zugewandten Stirnfläche nebeneinander zwei Vorsprünge (26) angeformt sind, die in einer Arretierungsstellung des Schiebers (12) nebeneinander in einer Linie mit der Mittelachse der Durchgangsbohrung (5) liegen.

10. Rohrnetzbauteil (3), insbesondere Molchstation einer Beschichtungsanlage, mit
- einem Anschlussstück zum Anschluss einer schlauch- oder rohrförmigen Leitung (2) mittels eines Verbindungselements (1),
- einer durch das Anschlussstück hindurch gehenden Durchgangsbohrung (25) zur Aufnahme eines Fluids und/oder eines Molchs,
- wobei das Anschlussstück zum Anschluss des Verbindungselements (1) eine Steckverbindung (12-22) und ein Verriegelungselement zur formschlüssigen Verriegelung der Steckverbindung (12-22) aufweist,
- wobei das Verriegelungselement eine Spannschraube (21) ist, die in einen Schieber (12) des Verbindungselements (1) eingreift,
**dadurch gekennzeichnet,**
- **dass** die Spannschraube (21) den Schieber (12) aus einer Freigabestellung in eine Arretierungsstellung verschiebt,
- **dass** bei einer Verschiebung des Schiebers (12) aus der Freigabestellung in die Arretierungsstellung mittels einer geneigten Klemmfläche an dem Schieber (12) eine axiale Verspannung der Steckverbindung (12-22) zwischen dem Verbindungselement (1) und dem Rohrnetzbauteil (3) bewirkt wird.

11. Rohrnetzbauteil (3) nach Anspruch 10, **dadurch gekennzeichnet, dass** die Steckverbindung (12-22) beschädigungsfrei lösbar ist.

12. Rohrnetzbauteil (3) nach Anspruch 10 oder 11, **dadurch gekennzeichnet, dass** die Steckverbindung (12-22) durch das Verriegelungselement (20) axial verspannbar ist und im montierten Zustand eine axial gerichtete Anpresskraft erzeugt, mit der das Verbindungselement (1) axial gegen das Rohrnetzbauteil (3) gedrückt wird.

13. Rohrnetzbauteil (3) nach einem der Ansprüche 10 bis 12, **gekennzeichnet durch** eine Sackbohrung (24) zur Aufnahme des Verbindungselements (1), wobei die Sackbohrung (24) an ihrem Boden eine Dichtfläche bildet und in die Durchgangsbohrung (25) übergeht.

14. Rohrnetzbauteil (3) nach einem der Ansprüche 10 bis 13, **dadurch gekennzeichnet, dass** sich die Durchgangsbohrung (25) am Übergang zu dem Verbindungselement (1) in Richtung des Verbindungselements (1) erweitert.

15. Rohrnetzbauteil (3) nach einem der Ansprüche 10 bis 14, **dadurch gekennzeichnet, dass** die Steckverbindung (12-22) beschädigungsfrei lösbar ist.

16. Rohrnetz mit einem Rohrnetzbauteil (3) nach einem der Ansprüche 10 bis 15 und einem Verbindungselement (1) nach einem der Ansprüche 1 bis 9.

17. Verwendung eines Verbindungselements (1) nach einem der Ansprüche 1 bis 9 zur Verbindung einer Molchstation mit einer schlauch- oder rohrförmigen Leitung (2) einer Beschichtungsanlage.

## Claims

1. Connecting element, in particular for connecting a hose to a pigging station in a coating installation, with
- a first connecting piece (4) for connecting a hose-like or tubular conduit (2),
- a second connecting piece (11) lying axially opposite the first connecting piece (4) for connection to a pipe system component (3), in particular to a pigging station,
- a through bore (5) passing axially through the first connecting piece (4) and through the second connecting piece (11) to receive a fluid and/or a pig,
- wherein for connection to the pipe system component (3) the second connecting piece (11) has a plug-in connection (12-22) with a locking element (12, 19) for positive locking of the plug-in connection (12-22),
- wherein the locking element is a slide (12) which is displaceable between a locked position and a release position,
**characterised in that**
- the slide (12) has on one end a clamping surface (20) which is inclined relative to its direction of displacement and on the opposite end it has an engagement (22) for the tightening screw (21), and
- in the case of a displacement of the slide (12) out of the release position into the locking position the inclined clamping surface (20) effects an axial clamping of the plug-in connection (12-22) between the connecting element (1) and the pipe system component (3).

2. Connecting element (1) as claimed in Claim 1, **characterised in that** the plug-in connection (12-22) is releasable without damage.

3. Connecting element (1) as claimed in any one of the preceding claims, **characterised in that** the plug-in connection (12-22) can be clamped axially by the locking element and in the assembled state generates an axially directed contact force by which the connecting element (1) is pressed axially against the pipe system component (3).

4. Connecting element (1) as claimed in Claim 4, **characterised in that** the slide (12) is displaceable in the transverse direction and is fixed in the axial direction.

5. Connecting element (1) as claimed in any one of the preceding claims, **characterised by** a piggable transition from the first connecting piece (4) to the tubular or hose-like conduit (2) and from the second connecting piece (11) to the pipe system component (3).

6. Connecting element (1) as claimed in any one of the preceding claims, **characterised in that** the transition from the first connecting piece (4) to the tubular or hose-like conduit (2) and from the second connecting piece (11) to the pipe system component (3) is substantially free of dead space.

7. Connecting element (1) as claimed in any one of the preceding claims, **characterised in that** the through bore (5) widens in the direction of the pipe system component (3) at the transition to the pipe system component (3) and/or that the through bore (5) widens in the direction of the conduit (2) at the transition to the conduit (2).

8. Connecting element (1) as claimed in any one of the preceding claims, **characterised in that** the second connecting piece (11) has a seal on the end face.

9. Connecting element as claimed in any one of the preceding claims, **characterised in that** on the slide (12) two projections (26), which in a locked position of the slide (12) lie adjacent to one another in a line with the central axis of the through bore (5), are formed adjacent to one another on the end face facing the pipe system component (3).

10. Pipe system component (3), in particular a pigging station of a coating installation, with
- a connecting piece for connecting a hose-like or tubular conduit (2) by means of a connecting element (1),
- a through bore (25) passing through the connecting piece to receive a fluid and/or a pig,
- wherein for connection of the connecting element (1) the connecting piece has a plug-in connection (12-22) and a locking element for positive locking of the plug-in connection (12-22),
**characterised in that**
- the tightening screw (21) displaces the slide (12) out of a release position into a locked position,
- in the event of a displacement of the slide (12) out of the release position into the locked position by means of an inclined clamping surface on the slide (12) an axial clamping of the plug-in connection (12-22) is effected between the connecting element (1) and the pipe system component (3).

11. Pipe system component (3) as claimed in Claim 10, **characterised in that** the plug-in connection (12-22) is releasable without damage.

12. Pipe system component (3) as claimed in either Claim 10 or 11, **characterised in that** the plug-in connection (12-22) can be clamped axially by the locking element (20) and in the assembled state generates an axially directed contact force by which the connecting element (1) is pressed axially against the pipe system component (3).

13. Pipe system component (3) as claimed in any one of Claims 10 to 12, **characterised by** a blind bore (24) to receive the connecting element (1), wherein the blind bore (24) forms a sealing surface on its base and merges into the through bore (25).

14. Pipe system component (3) as claimed in any one of Claims 10 to 13 **characterised in that** the through bore (25) widens in the direction of the connecting element (1) at the transition to the connecting element (1).

15. Pipe system component (3) as claimed in any one of Claims 10 to 14, **characterised in that** the plug-in connection (12-22) is releasable without damage.

16. Pipe system with a pipe system component (3) as claimed in any one of Claims 10 to 15 and a connecting element (1) as claimed in any one of Claims 1 to 9.

17. Use of a connecting element (1) as claimed in any one of Claims 1 to 9 for connecting a pigging station to a hose-like or tubular conduit (2) of a coating installation.

## Revendications

1. Elément de connexion (1), en particulier pour connecter un tuyau flexible à une station de raclage dans une installation d'enduction, comprenant
- une première pièce de raccordement (4) pour le raccordement à une conduite en forme de tuyau flexible ou de tuyau (2),
- une deuxième pièce de raccordement (11) opposée axialement à la première pièce de raccordement (4) pour le raccordement à un composant de réseau de tuyauterie (3), en particulier à une station de raclage,
- un perçage traversant (5) passant axialement à travers la première pièce de raccordement (4) et la deuxième pièce de raccordement (11) pour recevoir un fluide et/ ou un écouvillon,
- dans lequel la deuxième pièce de raccordement (11) présente pour le raccordement au composant de réseau de tuyauterie (3) une connexion à emboîtement (12 à 22) avec un élément de verrouillage (12, 19) pour le blocage par complémentarité de forme de la connexion à emboîtement (12 à 22),
- dans lequel l'élément de verrouillage est un coulisseau (12) qui peut être décalé entre une position de blocage et une position de libération,
**caractérisé en ce que**
- le coulisseau (12) présente à une extrémité une surface de serrage (20) inclinée par rapport à sa direction de décalage et à l'extrémité opposée une prise (22) pour une vis de serrage (21), et
- **en ce que** la surface de serrage inclinée (20), en cas de décalage du coulisseau (12) de la position de libération à la position de blocage, provoque un calage axial de la connexion à emboîtement (12 à 22) entre l'élément de connexion (1) et le composant de réseau de tuyauterie (3).

2. Elément de connexion (1) selon la revendication 1, **caractérisé en ce que** la connexion à emboîtement (12 à 22) peut être détachée sans risque d'endommagement.

3. Elément de connexion (1) selon l'une quelconque des revendications précédentes, **caractérisé en ce que** la connexion à emboîtement (12 à 22) peut être calée axialement par l'élément de verrouillage et génère à l'état monté une force de pression dirigée axialement par laquelle l'élément de connexion (1) est poussé axialement contre le composant de réseau de tuyauterie (3).

4. Elément de connexion (1) selon la revendication 4, **caractérisé en ce que** le coulisseau (12) peut être décalé dans la direction transversale et est fixe dans la direction axiale.

5. Elément de connexion (1) selon l'une quelconque des revendications précédentes, **caractérisé par** un passage raclable de la première pièce de raccordement (4) à la conduite (2) en forme de tuyau ou de tuyau flexible et de la deuxième pièce de raccordement (11) au composant de réseau de tuyauterie (3).

6. Elément de connexion (1) selon l'une quelconque des revendications précédentes, **caractérisé en ce que** le passage de la première pièce de raccordement (4) à la conduite (2) en forme de tuyau flexible ou de tuyau et le passage de la deuxième pièce de raccordement (11) au composant de réseau de tuyauterie (3) est substantiellement exempt de zones mortes.

7. Elément de connexion (1) selon l'une quelconque des revendications précédentes, **caractérisé en ce que** le perçage traversant (5) s'élargit au niveau du passage au composant de réseau de tuyauterie (3) en direction du composant de réseau de tuyauterie (3) et/ou **en ce que** le perçage traversant (5) s'élargit au niveau du passage à la conduite (2) en direction de la conduite (2).

8. Elément de connexion (1) selon l'une quelconque des revendications précédentes, **caractérisé en ce que** la deuxième pièce de raccordement (11) présente un joint sur la face.

9. Elément de connexion selon l'une quelconque des revendications précédentes, **caractérisé en ce que** sur le coulisseau (12), sur la face frontale tournée vers le composant de réseau de tuyauterie (3), deux saillies (26) sont rapportées côte à côte, qui se trouvent dans une position de blocage du coulisseau (12) côte à côte sur une ligne avec l'axe central du perçage traversant (5).

10. Composant de réseau de tuyauterie (3), en particulier une station de raclage d'une installation d'enduction, comprenant
- une pièce de raccordement pour le raccordement d'une conduite (2) en forme de tuyau flexible ou de tuyau au moyen d'un élément de connexion (1),
- un perçage traversant (25) passant à travers la pièce de raccordement pour recevoir un fluide et/ou un écouvillon,
- dans lequel la pièce de raccordement présente pour le raccordement de l'élément de connexion (1) une connexion à emboîtement (12 à 22) et un élément de verrouillage pour le verrouillage par complémentarité de forme de la connexion à emboîtement (12 à 22),
- dans lequel l'élément de verrouillage est une vis de serrage (21) qui met en prise un coulisseau (12) de l'élément de connexion (1),
**caractérisé en ce que**
- la vis de serrage (21) décale le coulisseau (12) d'une position de libération vers une position de blocage,
- **en ce qu'**en cas de décalage du coulisseau (12) de la position de libération à la position de blocage au moyen d'une surface de serrage inclinée sur le coulisseau (12), un calage axial de la connexion à emboîtement (12 à 22) est provoqué entre l'élément de connexion (1) et le composant de réseau de tuyauterie (3).

11. Composant de réseau de tuyauterie (3) selon la revendication 10, **caractérisé en ce que** la connexion à emboîtement (12 à 22) peut être détachée sans risque d'endommagement.

12. Composant de réseau de tuyauterie (3) selon la revendication 10 ou 11, **caractérisé en ce que** la connexion à emboîtement (12 à 22) peut être calée axialement par l'élément de verrouillage et génère à l'état monté une force de pression dirigée axialement par laquelle l'élément de connexion (1) est poussé axialement contre le composant de réseau de tuyauterie (3).

13. Composant de réseau de tuyauterie (3) selon l'une quelconque des revendications 10 à 12, **caractérisé par** un trou borgne (24) pour recevoir l'élément de connexion (1), dans lequel le trou borgne (24) forme sur son fond une surface d'étanchéité et passe au perçage traversant (25).

14. Composant de réseau de tuyauterie (3) selon l'une quelconque des revendications 10 à 13, **caractérisé en ce que** le perçage traversant (25) s'élargit au niveau du passage à l'élément de connexion (1) en direction de l'élément de connexion (1).

15. Composant de réseau de tuyauterie (3) selon l'une quelconque des revendications 10 à 14, **caractérisé en ce que** la connexion à emboîtement (12 à 22) peut être détachée sans risque d'endommagement.

16. Réseau de tuyauterie avec un composant de réseau de tuyauterie (3) selon l'une quelconque des revendications 10 à 15 et un élément de connexion (1) selon l'une quelconque des revendications 1 à 9.

17. Utilisation d'un élément de connexion (1) selon l'une quelconque des revendications 1 à 9 pour la connexion d'une station de raclage avec une conduite (2) en forme de tuyau flexible ou de tuyau d'une installation d'enduction.
